# EUROPEAN PATENT APPLICATION

(11) **EP 4 580 088 A1**
(43) Date of publication of application: **02.07.2025**
(21) Application number: 23857212.7
(22) Date of filing: 09.08.2023
(51) Int. Cl.: H04B 10/2575, G02F 1/03, G02F 1/065, H04B 1/18

(54) **WIRELESS RECEPTION DEVICE**

(30) Priority: 25.08.2022 JP 2022134378
(71) Applicant: Tokushima University, Tokushima-shi, Tokushima 770-8501 (JP); National Institute of Information and Communications Technology, Koganei-shi, Tokyo 184-8795 (JP)
(72) Inventor: YASUI Takeshi, Tokushima-shi, Tokushima 770-8501 (JP); KUSE Naoya, Tokushima-shi, Tokushima 770-8501 (JP); TOKIZANE Yu, Tokushima-shi, Tokushima 770-8501 (JP); HASE Eiji, Tokushima-shi, Tokushima 770-8501 (JP); KISHIKAWA Hiroki, Tokushima-shi, Tokushima 770-8501 (JP); OKAMURA Yasuhiro, Tokushima-shi, Tokushima 770-8501 (JP); KAJI Takahiro, Koganei-shi, Tokyo 184-8795 (JP); KAMADA Shun, Koganei-shi, Tokyo 184-8795 (JP); MOROHASHI Isao, Koganei-shi, Tokyo 184-8795 (JP); HISATAKE Shintaro, Nagoya-shi, Aichi 464-8601 (JP)
(74) Representative: Liedtke & Partner Patentanwälte
(86) International application number: PCT/JP2023/029110
(87) International publication number: WO 2024/043099

(57) **Abstract**

The present invention aims to enable seamless connection between high-frequency wireless communication and optical communication. A wireless reception device according to the present invention is a device for receiving a wireless signal modulated with an information signal, including a reception antenna, a laser emission element that outputs laser light with a predetermined wavelength, a micro-optical resonator that is excited by the laser light and generates an optical frequency comb with a repetition frequency different from a carrier frequency of the wireless signal by a difference frequency, an electro-optic conversion element that is provided at a reception portion of the reception antenna and optically modulates an arbitrary optical frequency mode within the optical frequency comb consisting of optical frequency modes, in accordance with the wireless signal, and an optical bandpass filter that separates a modulated component of the arbitrary optical frequency mode and an unmodulated component of an adjacent frequency mode spaced apart from the arbitrary optical frequency mode by the repetition frequency, the unmodulated component being most closely adjacent to the modulated component.

## Description

### TECHNICAL FIELD

The present invention relates to wireless reception devices for receiving wireless signals from other base stations or the like.

### BACKGROUND ART

Traditionally, in mobile (wireless) communications (such as 2G, 3G, 4G, and 5G), the advancement of semiconductor technology has driven evolution across generations (increasing speed and frequency). However, the frequencies to be handled in next generation mobile communications (Beyond 5G / 6G) are expected to extend into the so-called terahertz band (hereinafter, the THz band) with carrier frequencies of 300 GHz or higher, potentially reaching the technological limit (i.e., the upper frequency limit) of electrical methods. Specifically, fundamental issues are said to emerge, such as reduction in output power of wireless carrier waves, difficulty in balancing high-frequency conversion and power saving, increased phase noise and signal transmission loss, and time delays caused by signal conversion between optical and mobile communication.

THz wave detection is generally carried out using electrical methods. By using a high-speed THz detection element, such as a Schottky barrier diode (SBD), terahertz waves can be directly detected as electrical signals (homodyne detection or square-law detection). On the other hand, by mixing the THz wave (RF signal) with a local oscillator signal (LO signal) using a high-frequency mixer, a beat signal (IF signal), which corresponds to a difference frequency between the two signals, can be measured in the microwave or RF band (heterodyne detection).

On the other hand, optical communication, which utilizes optical fiber networks, offers the fastest information transmission speed, and in recent years, the development of silicon photonics technology has progressed, enabling ultra-high speed, large capacity, low latency, and low power consumption by replacing electronic wiring inside devices with optical wiring or optical waveguide. Such a background has led to recent examples of optical detection of THz wave in wireless communication. For example, spatially propagating THz waves are captured as electric-field signals applied to electro-optic crystals, and by utilizing the electro-optic effect (for example, the Pockels effect), THz-wave transmission information can be superimposed onto optical signals as modulated sideband light (Non-Patent Document 1). Moreover, a disclosed method employs two adjacent mode lights whose frequencies are spaced apart by approximately the frequency of a THz wave (wireless carrier), and an optical beat signal is detected between modulated sideband light of one mode light and an unmodulated carrier light of the other mode light to cancel out common phase noise, while improving signal-to-noise ratio (SN ratio) through heterodyne detection (Non-Patent Document 2).

On the other hand, an optical frequency comb (or micro-optical comb) generated from a micro-optical resonator is used to create two mode lights with synchronized optical phases at an optical frequency difference equal to the frequency of a THz wave (wireless carrier), and the two mode lights are employed for optical THz wave generation (Non-Patent Document 3).

### Prior Art Documents

### Non-Patent Documents

Non-Patent Document 1: T. Kaji, I. Morohashi, Y. Tominari, N. Sekine, T. Yamada, and A. Otomo, "W-band optical modulators using electro-optic polymer waveguides and patch antenna arrays," Optics Express, Vol. 29, Issue 19, pp. 29604-29614 (2021).

Non-Patent Document 2: S. Hisatake, H. H. N. Pham, and T. Nagatsuma, "Visualization of the spatial-temporal evolution of continuous electromagnetic waves in the terahertz range based on photonics technology," Optica, Vol. 1, Issue 6, pp. 365-371 (2014).

Non-Patent Document 3: N. Kuse, K. Nishimoto, Y. Tokizane, S. Okada, G. Navickaite, M. Geiselmann, K. Minoshima, and T. Yasui, "Low phase noise THz generation from a fiber-referenced Kerr microresonator soliton comb," Communications Physics, Vol. 5, Art. 312

(2022).

### SUMMARY OF THE INVENTION

### PROBLEMS TO BE SOLVED BY THE INVENTION

However, the electrical THz detection methods have the drawback of requiring medium-sized, complex, and expensive devices and being susceptible to factors such as electromagnetic induction noise. Moreover, when connecting between wireless and optical communications, signal conversion between electrical and optical signals causes time delays. On the other hand, in the optical detection of THz wave, THz-wave transmission information can be instantly superimposed onto optical carrier signals via the electro-optic effect and measured as optical signals, enabling the use of small-sized, simple, inexpensive, and technically mature optical communication platforms without large modification. As a result, these methods exhibit good compatibility with optical communication and high versatility, but have difficulty in achieving sufficient detection sensitivity for high-speed wireless communication due to low electro-optic conversion efficiency in the THz frequency band to be used for next generation mobile communications. Further, it is difficult to obtain two mode lights with low phase noise and frequencies spaced apart by approximately the frequency of the THz wave (wireless carrier).

### SOLUTION TO THE PROBLEMS

One aspect of the present invention is directed to a wireless reception device for receiving a wireless signal modulated with an information signal, including a reception antenna, a laser emission element that outputs laser light with a predetermined wavelength, a micro-optical resonator that is excited by the laser light and generates an optical frequency comb with a repetition frequency different from a carrier frequency of the wireless signal by a difference frequency, an electro-optic conversion element that is provided at a reception portion of the reception antenna and optically modulates an arbitrary optical frequency mode within the optical frequency comb consisting of optical frequency modes, in accordance with the wireless signal, and an optical bandpass filter that separates a modulated component of the arbitrary optical frequency mode and an unmodulated component of an adjacent frequency mode spaced apart from the arbitrary optical frequency mode by the repetition frequency, the unmodulated component being most closely adjacent to the modulated component.

The difference frequency may be between 10 GHz and 100 GHz.

The wireless reception device may further include a demodulation device that mixes the modulated component of the arbitrary optical frequency mode and the unmodulated component of the adjacent optical frequency mode and converts the resultant optical beat signal into an electric signal, the unmodulated component being adjacent to and spaced apart from the modulated component by the difference frequency.

The electro-optic conversion element may be composed of one or more electro-optic crystal materials selected from the group consisting of lithium niobate (LiNbO₃), zinc telluride (ZnTe), gallium phosphide (GaP), gallium arsenide (GaAs), and DAST.

The electro-optic conversion element may be composed of an electro-optic polymer (also referred to below as an "EO polymer").

The micro-optical resonator may be composed of one or more media having a non-linear optical effect and selected from the group consisting of silicon nitride (Si₃N₄), aluminum gallium arsenide (AlGaAs), lithium niobate (LiNbO₃), tantalum pentoxide (Ta₂O₅), and gallium nitride (GaN).

The reception antenna may be a parabolic antenna, a Cassegrain antenna, or a horn antenna and has the electro-optic conversion element provided near a focal point of the antenna.

### EFFECT OF THE INVENTION

One aspect of the present invention allows wireless transmission signals transmitted over wireless carriers in the terahertz band to be superimposed onto optical carrier with high efficiency, low phase noise, and minimal time delays, allowing information signals to be readily demodulated using standard optical communication platforms. Thus, it is possible to realize a wireless reception device that satisfies the requirements for Beyond 5G and higher communication standards and enables seamless connection with optical communication.

### BRIEF DESCRIPTION OF THE DRAWINGS

FIG. 1 is a block diagram of a wireless reception device in the first embodiment of the present invention.
FIG. 2 is a schematic diagram illustrating a specific example of an electro-optic conversion element and a reception antenna in the first embodiment of the present invention.
FIG. 3 presents conceptual diagrams describing the specific example of the electro-optic conversion element in the first embodiment of the present invention.
FIG. 4 is a diagram describing the operation of the electro-optic conversion element in the first embodiment of the present invention.
FIG. 5 is a diagram describing the operation of the first embodiment of the present invention.
FIG. 6 is a block diagram of a wireless reception device in the second embodiment of the present invention.
FIG. 7 is a flowchart for the first example of the present invention.
FIG. 8 is a diagram describing a method of an experiment in the second example of the present invention.
FIG. 9 presents graphs showing the results of the experiment in the second example of the present invention.

### MODES FOR CARRYING OUT THE INVENTION

### (First Embodiment)

Hereinafter, the first embodiment will be described in detail with reference to the drawings. In this embodiment, a wireless reception device 2 is assumed to be a device that performs the process of receiving a wireless signal transmitted from a wireless base station 1, superimposing an information signal contained in the wireless signal onto an optical carrier, and transmitting the resultant signal to a demodulation device 3.

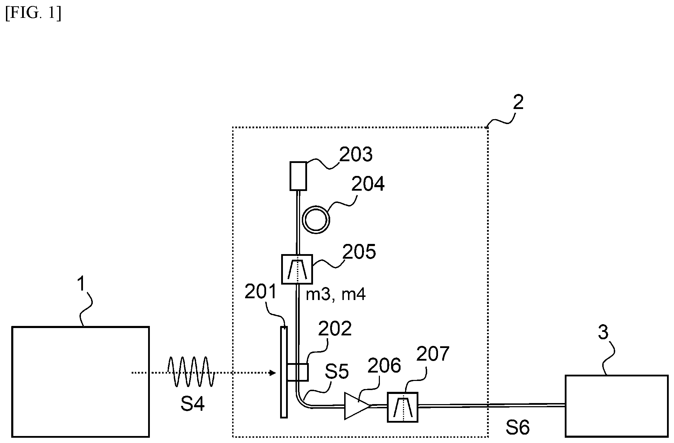

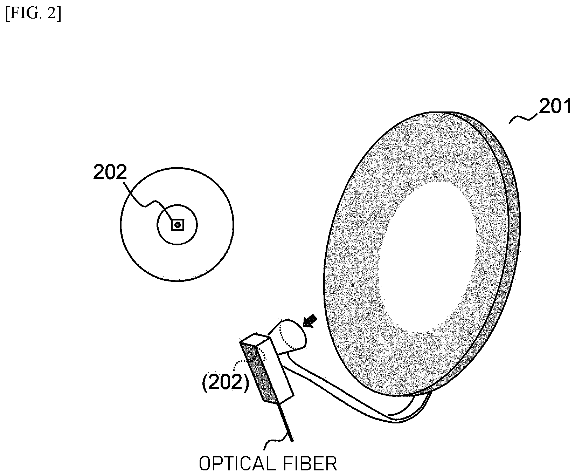

FIG. 1 illustrates a block diagram of the wireless reception device 2 in the present embodiment. In FIG. 1, the wireless reception device 2 has a reception antenna 201 to receive a wireless signal S4. The reception antenna 201 is equipped with an electro-optic conversion element 202 for converting the wireless signal received by the reception antenna 201 into an optical modulated signal. FIG. 2 illustrates a specific example of the reception antenna 201.

The reception antenna 201 can be a parabolic or Cassegrain antenna having a concave reflecting surface. Alternatively, the reception antenna 201 can be a horn antenna having a convex lens on an opening surface. In either case, the electro-optic conversion element 202 is provided near the focal point of the antenna. Note that in the present embodiment, the wireless base station 1 is assumed to have a high-gain directional antenna sufficiently adjusted in position relative to the reception antenna 201 to minimize transmission loss.

Furthermore, in FIG. 1, 203 denotes a laser emission portion for emitting laser light of a constant frequency (wavelength). The laser emission portion is preferably a DFB laser emitting light whose emission wavelength is at or around 1550 nm. Denoted at 204 is a micro-optical resonator for generating an optical frequency comb when excited by the laser light. The optical frequency comb refers to light with an ultra-discrete multispectral structure consisting of an array of a large number of optical frequency modes whose optical phases arranged at equal frequency intervals, patterned like comb teeth.

The micro-optical resonator 204 can be formed in a ring shape on a semiconductor substrate. The diameter of the ring can range from 40 µm to 400 µm. Alternatively, the micro-optical resonator 204 can be composed of one or more media having a non-linear optical effect and selected from the group consisting of silicon nitride (Si₃N₄), aluminum gallium arsenide (AlGaAs), lithium niobate (LiNbO₃), tantalum pentoxide (Ta₂O₅), and gallium nitride (GaN).

The micro-optical resonator 204 has a short optical resonator length and therefore can generate an optical frequency comb (micro-optical comb) with frequencies between adjacent optical frequency modes designed to extend as high as the terahertz band. The frequencies (fᵣₑₚ) between the adjacent optical frequency modes can be set from 50 GHz to 3 THz, preferably from 100 GHz to 1 THz, and more preferably from 350 GHz to 600 GHz.

In the present embodiment, the repetition frequency (fᵣₑₚ) of the optical frequency comb is set to differ from the carrier frequency (f_{THz}) of the wireless signal by a difference frequency Δf. The difference frequency Δf is treated as an intermediate frequency in subsequent stages and is preferably within the frequency range that can be handled by electronic circuits, but if the difference frequency Δf is close to the low frequency range of the information signal, the information signal might be affected by issues such as distortion. For example, the difference frequency Δf is preferably approximately from 10 GHz to 100 GHz.

Here, assuming that the carrier contained in the wireless signal S4 is generated from another optical frequency comb and the repetition frequency (i.e., the carrier frequency) is f_{THz}, the repetition frequency (fᵣₑₚ) of the optical frequency comb on the reception side is simply required to be f_{THz} - Δf or f_{THz} + Δf. In other words, the micro-optical resonator 204 excited by the laser emission portion 203 is simply required to generate an optical frequency comb with a repetition frequency of f_{THz} - Δf or f_{THz} + Δf.

Denoted at 205 is an optical bandpass filter for extracting arbitrary adjacent optical frequency modes m3 and m4 (with respective frequencies ν₃ and ν₄ and an optical frequency difference of fᵣₑₚ) from the optical frequency comb. In the present embodiment, both the optical frequency modes m3 and m4 are supplied to the electro-optic conversion element 202.

The electro-optic conversion element 202 has the function of propagating probe light through an optical waveguide provided in an electro-optic (EO) material or a substrate, thereby performing phase modulation on the probe light in accordance with an external electric field. The electro-optic conversion element 202 can, for example, be a so-called LN modulator using a lithium niobate (LiNbO₃) crystal as the electro-optic material. In the present embodiment, the "external electric field" specifically refers to the wireless signal (S4) received by the reception antenna. Other examples of the electro-optic crystal material, in addition to lithium niobate, include zinc telluride (ZnTe), gallium phosphide (GaP), gallium arsenide (GaAs), DAST, and EO polymers.

An example of the electro-optic polymers (i.e., the EO polymers) herein is the one disclosed in Japanese Patent Application No. 2019-537669.

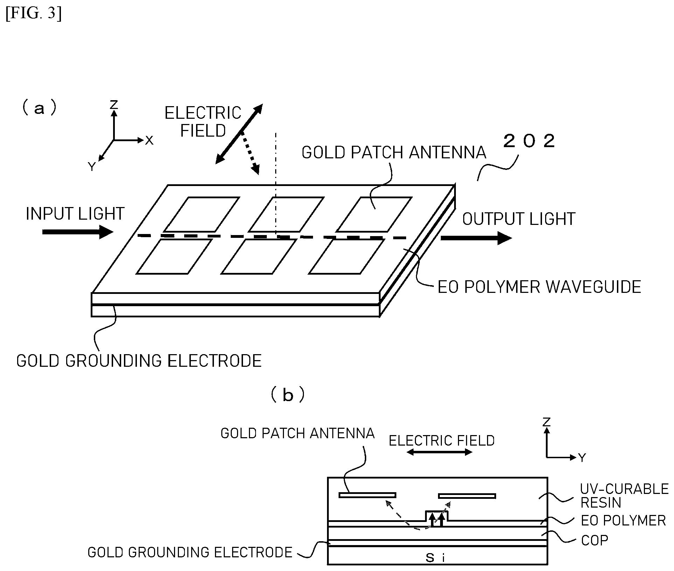

The structure and operation of the electro-optic conversion element 202 using an EO polymer will be described in more detail with reference to FIGS. 3 to 5. Initially, the wireless signal S4 transmitted by the wireless reception device 1 is applied through the reception antenna 201 to the electro-optic conversion element 202 as the external electric field. The wireless signal S4 can be a carrier signal with a frequency of f_{THz} (for example, 300 GHz) modulated by an information signal. The electro-optic conversion element 202 can be structured as shown in FIGS. 3(a) and 3(b), but is not particularly limited to this. These figures illustrate (a) a perspective view and (b) a cross-sectional view of the structure.

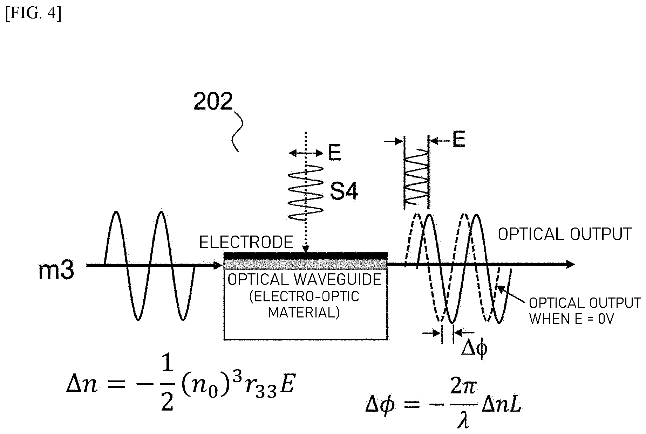

In both figures, the electro-optic conversion element 202 has an EO polymer optical waveguide provided on COP (cycloolefin polymer). Moreover, on both sides of the waveguide, gold patch antennas are embedded in UV-curable resin. When the electric field component of the wireless signal oscillates laterally across the optical waveguide, an alternating electric field is generated between the gold patch antennas on opposite sides of the optical waveguide. This electric field induces the Pockels effect on the EO polymer, causing a change in refractive index (Δn). As a result, phase modulation is induced in the optical frequency modes propagating through the EO material. This process is illustrated in FIG. 4.

As will be described later, it is sufficient to ultimately extract the modulated component of the optical frequency mode m3 and an unmodulated component of the adjacent frequency mode m4 spaced apart from the optical frequency mode m3 by the repetition frequency fᵣₑₚ, and therefore the electro-optic conversion element 202 can be supplied only with the optical frequency mode m3, but the present embodiment will be described with respect to the configuration in which both the optical frequency modes m3 and m4 are inputted into the electro-optic conversion element 202 and ultimately separated by an optical bandpass filter 207.

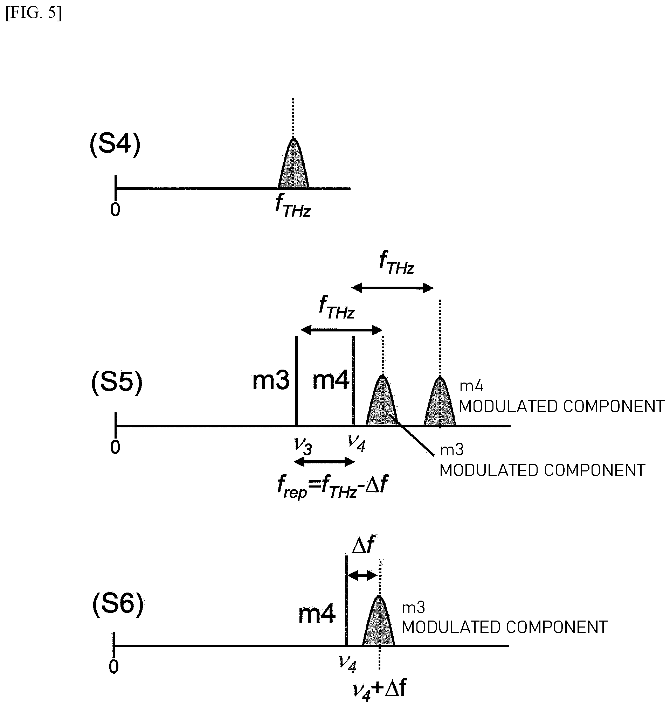

The electro-optic phase modulation induced by the THz wave results in modulated signal components appearing at positions separated by f_{THz} from the light (unmodulated components) of the optical frequency mode pair (m3 and m4) in the optical frequency spectrum of the pair (S5 in FIG. 5).

The bandpass filter 207 extracts the modulated component of the optical frequency mode light (m3), along with the unmodulated component of the optical frequency mode light (m4), from output light S5 of the electro-optic conversion element 202 amplified by an optical amplification element 206 (S6). In this case, these extracted unmodulated and modulated components are from the most adjacent optical frequency modes. In the example of FIG. 5, the optical frequency modes m3 and m4 and their respective modulated signal components are outputted by the electro-optic conversion element 202 at intervals of f_{THz} (for example, 300 GHz), and the bandpass filter 207 extracts the modulated signal component of the optical frequency mode m3 and the unmodulated signal component of the optical frequency mode m4. In the present embodiment, the wireless signal S4 has a carrier (contained therein) with a frequency of f_{THz} (300 GHz) modulated with an information signal, and since the optical frequency difference between the optical frequency mode pair (m3 and m4) is f_{THz} - Δf, the frequency interval between the modulated signal component of the optical frequency mode m3 and the unmodulated signal component of the frequency mode m4, as extracted by the bandpass filter 207, is (ν₃ + f_{THz}) - (ν₃ + f_{THz} - Δf) = Δf.

The frequency Δf corresponds to a so-called intermediate frequency and is set at 30

GHz in the present embodiment. Therefore, by mixing the two components whose frequency difference is Δf = 30 GHz and converting the resultant optical beat signal into an electric signal, a transmission information signal modulated with a 30-GHz carrier (baseband) signal is obtained. For a frequency of approximately 30 GHz, demodulation can be performed using a standard electronic circuit. In the present embodiment, the output light of the bandpass filter 207 is sent through an optical fiber to the demodulation device 3 (S6), where the output light is electrically demodulated, resulting in a baseband information signal.

It should be noted that the EO material used in the present embodiment is an EO polymer. EO polymers have a high EO coefficient compared to conventional electro-optic crystals (i.e., inorganic materials, such as ZnTe and LN) while also maintaining relatively low loss in the THz region, enabling ultra-fast response at several hundred GHz or higher. Moreover, the group velocity mismatch between the THz wave and the optical signal can also be adjusted.

### (Second Embodiment)

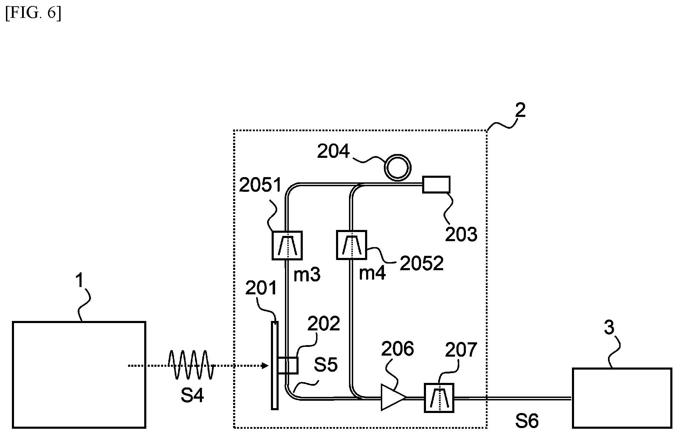

FIG. 6 illustrates a block diagram of the second embodiment of the present invention. In FIG. 6, the reception antenna 201, the electro-optic conversion element 202, the laser emission portion 203, the micro-optical resonator 204, the optical amplification element 206, and the optical bandpass filter 207 function equivalently to those shown in FIG. 1. In the present embodiment, bandpass filters 2051 and 2052 respectively separate the optical frequency mode m3 and the adjacent optical frequency mode m4 independently of each other, and only the optical frequency mode m3 is supplied to the electro-optic conversion element 202 as carrier light.

As a result of the configuration as described above, the optical frequency mode m4 includes no modulated signal. Thus, the optical bandpass filter 207 is not required to remove crosstalk from modulated signals of adjacent modes, allowing for less stringent specifications for the optical bandpass filter 207.

### EXAMPLES

Hereinafter, examples of the present invention will be described.

### (First Example)

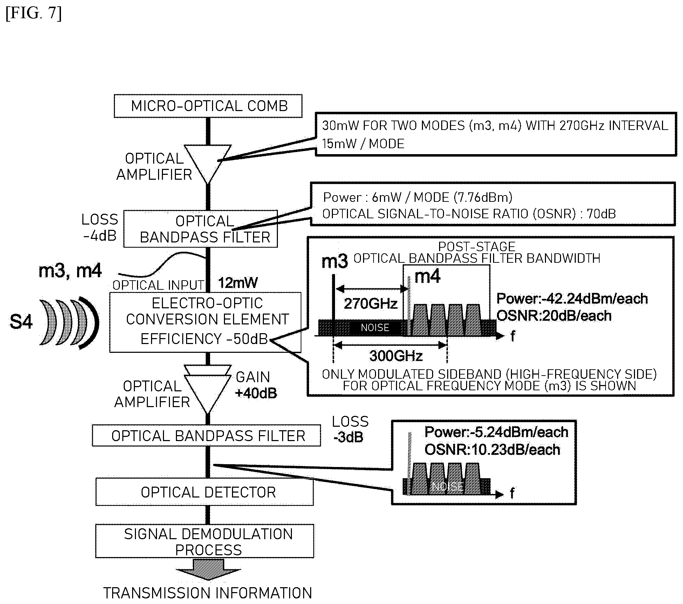

FIG. 7 illustrates a flowchart for the first example. This figure shows estimated gains and losses for the steps from the reception of the wireless signal S4 at the antenna 201 to the extraction of the modulated signal component by the optical bandpass filter 207.

First, each mode of the modulation-target optical frequency mode pair (m3 and m4) extracted by the optical bandpass filter from the optically amplified output of the micro-optical comb is assumed to have a power of 6 mW (7.76 dBm). The optical frequency mode pair (m3 and m4) is supplied to the electro-optic conversion element as carrier light, and the modulated components of the pair are generated as optical sidebands at the frequency of the wireless signal S4. FIG. 7 shows only the modulated sideband (on the high-frequency side) of the optical frequency mode (m3). Here, the information signal (modulated component) contained in the wireless signal is assumed to be transmitted over four frequency channels using frequency division multiplexing. Moreover, it is also assumed that the conversion efficiency for the information signal (modulated component) on each frequency channel is approximately -50 dB (0.00001 times), the gain of the optical amplifier is +40 dB, and the loss of the optical bandpass filter is -3 dB. Under these conditions, the information signal (modulated component) contained in the output of the optical bandpass filter is estimated to be -5.24 dBm (0.3 mW) per frequency channel.

### (Second Example)

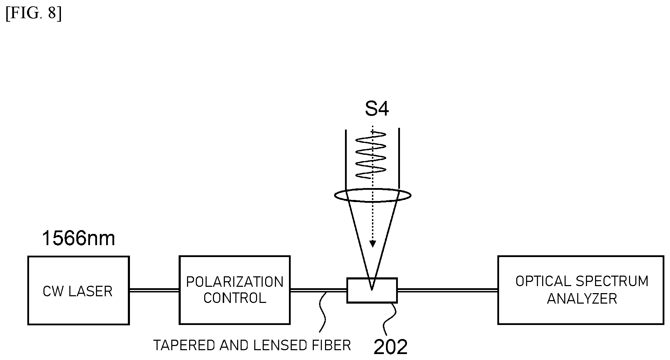

This example describes an actual experiment involving irradiating the wireless signal S4 (with a frequency of 100 GHz) onto the EO polymer modulation device, i.e., the electro-optic conversion element 202, and optically modulating carrier light. FIG. 8 illustrates the method of the experiment in the present example. In the present example, the carrier light was generated using a CW laser with a wavelength of 1566 nm, and, after polarization control, supplied to the optical waveguide on the EO polymer modulation device coupled via a tapered and lensed fiber.

On the other hand, the wireless signal S4 consisted only of a carrier with a frequency of 100 GHz, which was focused at a single point with appropriate power and irradiated onto the EO polymer modulation device. As a result, the carrier light was modulated by the electric field component of the wireless signal S4, as described earlier, and sent through the optical fiber to an optical spectrum analyzer.

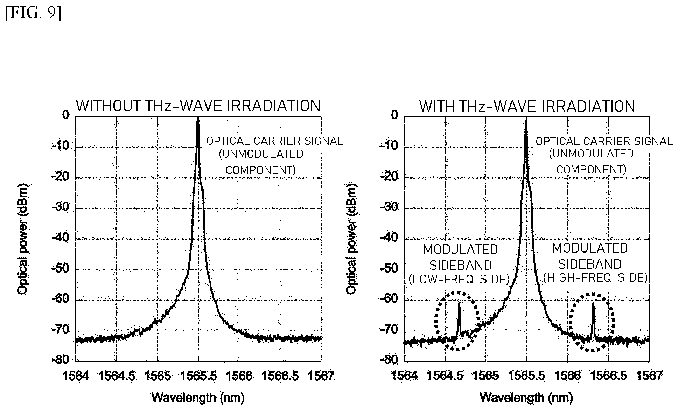

FIG. 9 shows the behavior of optical spectra measured by the optical spectrum analyzer. It can be observed that modulated sidebands spike at positions on both sides of the optical carrier signal, about 1 nm in wavelength away from the optical carrier signal. This indicates that the carrier light was modulated with the 100-GHz wireless signal.

### INDUSTRIAL APPLICABILITY

The present invention is applicable to switching stations and relay stations that optically transmit wireless signals received from mobile terminals and wireless base stations.

### DESCRIPTION OF THE REFERENCE CHARACTERS

1 wireless base station
2 wireless reception device
3 demodulation device
201 reception antenna
202 electro-optic conversion element
203 laser emission portion
204 micro-optical resonator
205, 207 optical bandpass filter
206 optical amplifier
2051, 2052 optical bandpass filter

## Claims

1. A wireless reception device for receiving a wireless signal modulated with an information signal, comprising:
a reception antenna;
a laser emission element that outputs laser light with a predetermined wavelength;
a micro-optical resonator that is excited by the laser light and generates an optical frequency comb with a repetition frequency different from a carrier frequency of the wireless signal by a difference frequency;
an electro-optic conversion element that is provided at a reception portion of the reception antenna and optically modulates an arbitrary optical frequency mode within the optical frequency comb consisting of optical frequency modes, in accordance with the wireless signal; and
an optical bandpass filter that separates a modulated component of the arbitrary optical frequency mode and an unmodulated component of an adjacent frequency mode spaced apart from the arbitrary optical frequency mode by the repetition frequency, the unmodulated component being most closely adjacent to the modulated component.

2. The wireless reception device according to claim 1, wherein the difference frequency is between 10 GHz and 100 GHz.

3. The wireless reception device according to claim 1 or 2, further comprising a demodulation device that mixes the modulated component of the arbitrary optical frequency mode and the unmodulated component of the adjacent optical frequency mode and converts the resultant optical beat signal into an electric signal, the unmodulated component being adjacent to and spaced apart from the modulated component by the difference frequency.

4. The wireless reception device according to claim 3, wherein the electro-optic conversion element is composed of one or more electro-optic crystal materials selected from the group consisting of lithium niobate (LiNbO₃), zinc telluride (ZnTe), gallium phosphide (GaP), gallium arsenide (GaAs), and DAST.

5. The wireless reception device according to claim 3, wherein the electro-optic conversion element is composed of an electro-optic polymer.

6. The wireless reception device according to claim 3, wherein the micro-optical resonator is composed of one or more media having a non-linear optical effect and selected from the group consisting of silicon nitride (Si₃N₄), aluminum gallium arsenide (AlGaAs), lithium niobate (LiNbO₃), tantalum pentoxide (Ta₂O₅), and gallium nitride (GaN).

7. The wireless reception device according to claim 3, wherein the reception antenna is a parabolic antenna, a Cassegrain antenna, or a horn antenna and has the electro-optic conversion element provided near a focal point of the antenna.
